(19) Europäisches Patentamt
European Patent Office
Office européen des brevets

(11) **EP 0 993 609 B1**

(12) **EUROPÄISCHE PATENTSCHRIFT**

(45) Veröffentlichungstag und Bekanntmachung des Hinweises auf die Patenterteilung:
**10.07.2002 Patentblatt 2002/28**

(21) Anmeldenummer: **98929409.5**

(22) Anmeldetag: **02.06.1998**

(51) Int Cl.[7]: **G01N 30/86**, G01N 30/82

(86) Internationale Anmeldenummer:
**PCT/EP98/03272**

(87) Internationale Veröffentlichungsnummer:
**WO 99/01760 (14.01.1999 Gazette 1999/02)**

(54) **VERFAHREN ZUR BESTIMMUNG DER ANZAHL VON KOMPONENTEN IN PEAKS, BANDEN UND SIGNALEN VON CHROMATOGRAMMEN, ELEKTROGRAMMEN UND SPEKTROGRAMMEN ALLER ART**

PROCESS FOR DETERMINING THE NUMBER OF COMPONENTS IN PEAKS, BANDS AND SIGNALS OF CHROMATOGRAMS, ELECTROGRAMS AND SPECTROGRAMS OF ALL TYPES

PROCEDE POUR DETERMINER LE NOMBRE DES COMPOSANTES DANS DES CRETES, DES BANDES ET DES SIGNAUX DE CHROMATOGRAMMES, ELECTROGRAMMES ET SPECTROGRAMMES DE TOUS TYPES

(84) Benannte Vertragsstaaten:
**AT BE CH DE DK FR GB IT LI NL SE**

(30) Priorität: **30.06.1997 DE 19727879**

(43) Veröffentlichungstag der Anmeldung:
**19.04.2000 Patentblatt 2000/16**

(73) Patentinhaber: **GSF-Forschungszentrum für Umwelt und Gesundheit GmbH**
**85764 Neuherberg (DE)**

(72) Erfinder:
• **BENGSCH, Eberhard**
**D-81549 München (DE)**
• **POLSTER, Jürgen**
**D-85356 Freising (DE)**
• **KETTRUP, Antonius**
**D-59821 Arnsberg (DE)**

(56) Entgegenhaltungen:
**EP-A- 0 294 121        EP-A- 0 486 030**
**US-A- 5 596 135**

• **POLSTER J ET AL: "New methods for spectrometric peak purity analysis in chromatography" JOURNAL OF CHROMATOGRAPHY A, Bd. 800, Nr. 2, 27. März 1998, Seite 121-133 XP004113588**

**Beschreibung**

Die Erfindung betrifft ein Verfahren zur Bestimmung der Anzahl von Komponenten in Peaks, Banden und Signalen von Chromatogrammen, Elektrogrammen und Spektrogrammen aller Art.

Die moderne Analytik und Trenntechnik für Stoffe jedweder Art bewegt sich immer mehr in Richtung der vollständigen Automatisierung von der Probennahme bis zur Erlangung der gesuchten Endergebnisse. Dabei läuft das Verfahrensschema unabhängig von der Art der Analyse immer wieder identisch ab, sei es bei der allgemeinen Stoffauffindung und ihrer Identifizierung, als auch bei besonderen Beispielen, wie bei der Sequenzierung von Proteinen, Nukleinsäuren, Kohlenhydraten, Lipiden etc.: Progressives Anheften, Verteilen aufgrund individuellen Wanderungsverhaltens und Desorbieren von Substraten an Trägermaterialien verschiedenster Art und die anschließende Substrat-Detektion mittels eines darauf ansprechenden Dispositivs, vorzugsweise spektroskopischer Natur.

Erfahrungsgemäß ist es dabei unvermeidlich, daß sich neben den homogenen Detektionspeaks, die jeweils nur aus einer Reinkomponente stammen (= 100%ige Peakreinheit), in anderen Signalen die spektralen Beiträge zweier oder mehrerer Komponenten mischen (= Mischpeaks). Hauptursachen dafür sind:

- Quasi-Identität der zu trennenden Komponenten, z. B. kommt es in der Naturstoffchemie zum Auftreten von Wirkstoffamilien, deren Einzelkomponenten sich voneinander nur geringfügig unterscheiden

- Anwendung eines unangepaßten Trennverfahrens, das mehrere Komponenten in der gleichen Detektionszone erscheinen läßt.

- Peak-Erfassung unter nicht optimalen Detektionsbedingungen.

Die Peakreinheit und ggf. die Anzahl der sich spektral überlappenden Komponenten konnte bisher geräte-logistisch nicht ohne weiteres erkannt und verwertet werden. Sie ist jedoch für die Erlangung eindeutiger Meßergebnisse von fundamentaler Bedeutung. Das Gerät reagiert beim Auftreten einer solchen Unsicherheit mit Verzögerung und Zweifelsbehaftung der Endergebnisse.

Hochentwickelte, in jeder sonstigen Weise optimierte Meß- und Trennverfahren werden durch diesen generellen Unsicherheitsfaktor in ihrer Effizienz limitiert.

In der US 5 596 135 A ist ein Verfahren auf der Basis von Extinktiosdifferenzen-Diagrammen beschrieben, mit dessen Hilfe bei Chromatogrammen erkannt wird, ob ein Peak von einer oder von mehreren Komponenten verursacht wurde. Bei mehr als einer Komponente kann deren Anzahl nicht eindeutig erkannt werden.

Aus der EP 0 486 030 A ist ein ähnliches Verfahren, jedoch auf der Basis von Extinktions-Diagrammen bekannt.

Des weiteren ist aus der EP 0 294 121 A ein Verfahren bekannt, bei dem mit Hilfe einer mathematisch aufwendigen Hauptkomponenten-Analyse (auf Matrixbasis unter Bestimmung von Eigenwerten und Eigenvektoren) die Anzahl der Komponenten eines Gemisches bestimmt werden kann.

Aufgabe der Erfindung ist es ein einfaches Verfahren bereitzustellen, mit dessen Hilfe die Anzahl der Komponenten in einem Gemisch eindeutig erkannt wird. Gelöst wird diese Aufgabe durch die Merkmale des Patentanspruchs 1. Die Unteransprüche beschreiben vorteilhafte Ausgestaltungen der Erfindung.

Das Verfahren gibt ein ein Präzisions- und Schnellverfahren zur Ermittlung der Anzahl von Komponenten in Peaks, Banden und Signalen an, die zum Zwecke der Analyse und Stofftrennung in Spektrogrammen aller Art überall dort erhalten werden, wo energiekorrelierte Meßwerte in Funktion eines evolutiven Parameters auf und wieder abgebaut werden, wobei die aus jeweils einem solchen Parameterwert hervorgehende, unterschiedlich energiekorrelierte Meßwerte-Schar gegeneinander in Beziehung gesetzt wird, wodurch charakteristische geometrische Figuren entstehen, in denen der verursachende evolutive Parameter nicht mehr enthalten ist und wobei die erhaltenen Figuren in Funktion ihrer Komplexität stufenweise erst zu Geraden, dann zu Punkten reduziert werden, womit auf einfachste Weise die Anzahl der zu den Peaks beitragenden Komponenten und damit die bestandteilmäßige Zusammensetzung des gesamten Spektrogramms sowie des zu untersuchenden und/oder zu trennenden Stoffgemisches erhalten wird.

Eine vorteilhafte Ausgestaltung besteht darin, daß anstelle der energiekorrelierten Direkt-Meßwerte, deren Differenzen oder Quotienten jetzt Quotienten der Differenzen in einfacher oder multipler Weise zueinander in Bezug gebracht werden, wodurch es progressiv möglich wird, 2, 3, 4 oder mehr Einzelbestandteile sicher aus dem Peak zu extrahieren sowie sie zu identifizieren und zu trennen, oder daß die in jeweils einem Parameterbereich von den zugehörigen Energiemeßwerten umschlossenen Flächen als Integrale miteinander in Bezug gesetzt werden, wodurch geometrische Figuren entstehen, aus denen Peakzusammensetzung und Analysenergebnis abzulesen ist, was zusätzlich mit einer entscheidenden Verbesserung des Signal/Rauschverhältnis-ses und mit einem entsprechenden Gewinn der Empfindlichkeit des zugehörigen technischen Verfahrens verbunden ist.

Eine weitere Variante des Verfahrens zur Bestimmung der Anzahl von Komponenten in Strukturen von Spektrogrammen, wobei die Strukturen energiekorrelierte Messwerte sind, die sich als Funktion eines evolutiven Parameters auf- und wieder abbauen und sich so mit dem Parameter verändern, besteht aus folgenden Verfahrensschritten:

a) Ermitteln von mindesens 2 verschiedenen Funktionswerten von Messwerten, wobei jeder Messwert einer anderen Energie zugeordnet ist, bei gleichem Parameter,

b) Ermitteln von weiteren mindestens 2 weiteren Funktionswerten mit den gleichen Energiezuordnung wie bei Schritt a) bei mindestens zwei weiteren verschiedenen Parametern, so daß jedem Energiewert mindestens drei Funktionswerte bei drei verschiedenen Parametern zugeordnet sind,

c) Interpretieren der zu den verschiedenen Energien gehörenden Funktionswerte als Parameterdarstellung einer mindestens zweidimensionalen Kurve und

d) Auswerten der Kurve anhand vorgegebener Kriterien. Dabei können die Messwerte Extinktionswerte und der Parameter die Zeit sein.

Bekanntlich laufen die Trennungs- und Analysenverfahren von Stoffgemischen in ihrer entscheidenden Phase über die Registrierung von solchen Detektionspeaks, die vorzugsweise aus spektrosköpischen Meßdaten resultieren. Dies ist beispielsweise so bei der HPLC, der Flüssigkeits-, Gas-, Dünnschicht-, Affinitäts-, Adsorptions- und Ionenaustausch-Chromatographie sowie bei den elektrophoretischen Verfahren und jeder analogen Trenntechnik.

Von einer einfachen und effizienten Behebung des oben charakterisierten zentralen Mangels ist ein bedeutender technischer Fortschritt für alle automatisierten Trennund Analyseverfahren zu erwarten.

Die geschilderten Mängel werden durch das beanspruchte Verfahren behoben. Es ist direkt, einfach, verzögerungsfrei und signifikant.

Es arbeitet mit einem Minimum an Auswertungsaufwand und führt zu unzweifelhaften Ergebnissen.

Der Detektionspeak steht im Zentrum der Lösung des gestellten Problems.

Ausgehend von den ersten klassischen Trennverfahren hat insbesondere die Zahl der durch Chromatographie bewältigten analytischen und präparativen Stofftrennungen ständig zugenommen. Allein in Europa werden in allen Forschungs- und Berufszweigen über 100 000 Geräte dieser Art betrieben. Man kann davon ausgehen, daß sich dieser Trend fortsetzt. Dabei werden meistens solche Detektions- und Meßmethoden eingesetzt, die spektroskopische Daten in Abhängigkeit von einer Retentionszeit und/oder einem Wanderungsverhalten registrieren. Die so erhaltenen Chromatogramme werden dann für die Identifizierung und für die quantitative Bestimmung von Einzelkomponenten herangezogen. Von entscheidender Bedeutung war dabei bisher, daß die einzelnen Stoffe auch tatsächlich voneinander getrennt werden und homogene Einzelsignale liefern.

In der Tat stellt sich bei jedem chromatographischen Trennverfahren auf der Basis spektroskopischer Meßmethoden immer wieder die Grundfrage: Wieviele Komponenten machen sich in den einzelnen Peaks der Chromatogramme spektroskopisch bemerkbar?

Wegen der zentralen Bedeutung des Einzelbeitrags jeder Komponente zum mehr oder weniger komplexen Chromatogramm sind bislang zahlreiche Methoden für ihre individuelle Charakterisierung entwickelt worden. Die großen Anstrengungen, die bis zur Gegenwart in dieser Richtung unternommen wurden, und immer wieder unternommen werden, belegen, daß dieses Problem trotz anhaltender Bemühungen bis heute noch nicht befriedigend gelöst worden ist.

Die Lösung dieses Problems hat für alle Meß- und Trennungsmethoden, die auf der Registrierung zeitabhängiger Signale basieren, grundsätzliche Bedeutung. Diese Bedeutung erweitert sich auf jedes andere Verfahren, bei dem evolutiv ein Sigrial aufund wieder abgebaut wird. Wie in der Chromatographie können beispielsweise auch in der laufenden Elektrophorese die einzelnen separierten Banden zeitabhängig und positionsabhängig spektroskopisch untersucht werden.

Das Driften von Basislinien und das partielle Untertauchen von schwachen Signalen im Rauschen stellen zusätzliche Komplikationsparameter dar, für die von der erfindungsgemäßen Lösung entscheidende Verbesserungen erwartet werden müssen. Bei Konzentrationen an der Detektionsgrenze wie z. B. beim Erreichen der Sequenzierungsgrenze von Proteinen stellt sich die Frage: Real-Peak, Rausch-Peak, Verunreinigungs-Peak oder Mischung aus ihnen?

Die Lösung des Problems erfordert notwendigerweise einen neuen Weg zur Analyse und Behandlung von Detektionspeaks und ihre sinnvolle Einordnung in einen vorzugsweise vollautomatisierten Gesamtprozeß.

Für die Peak-Analyse werden in der HPLC und der spektroskopischen Elektrophorese bevorzugt Diodenarrayspektrometer im UV-VIS-Bereich eingesetzt. Dadurch können heute mit leistungsfähigen Rechnern Chromatogramme und Elektrogramme bis hinunter in den Millisekundenbereich spektral aufgelöst werden. Die so registrierten 3D-Chromatogramme und Elektrogramme (Extinktion versus Wellenlänge versus Retentionszeit bzw. einem elektrochemischem Parameter) werden dann in der Regel einer aufwendigen numerischen Analyse unterworfen. Beispielhaft wurden dazu die folgenden Verfahren entwickelt:

- Flächenschwerpunktsanalyse
- "Peak-Dekonvolution"
- Lot- und Abschälmethode
- Spektrenvergleich mit Hilfe chemometrischer Verfahren
- "Peak-Purity-Index"
- "Rationing" (Ratiobildung)

Die meisten dieser Verfahren sind aufwandsmäßig hoch anspruchsvoll und sind in den kommerzialisierten Geräten kostenintensiv integriert. So werden multivariate Methoden oder Kurvenanalysen mit Hilfe von Gauss-Verteilungskurven angewendet Alle diese Verfahren weisen jedoch ernste Nachteile auf:

- der Anwender kann diese Verfahren meistens nur schematisch routinemäßig ohne weitere Modifizierung anwenden, da diese Methoden in der Regel olhne Variationsmöglichkeiten als feste, starre unbeeinflußbare und unkontrollierbare "black-box"-Einheiten angeboten werden,

- der Anwender kann bei widersprüchlichen Aussagen verschiedener Verfahren selbst nicht entscheiden, welchen Ergebnissen ein höheres Gewicht beizumessen ist,

- numerische Artefakte und Probleme, die mathematisch schlecht konditioniert sind, können bei Routineanwendungen nur schwer erkannt werden,

- die Erfahrung des Anwenders ist in die Auswertung nicht integrierbar: Das Instrument ist nicht "lernfähig".

Die Extinktions(E)-, Extinktionsdifferenzen(ED)- und Extinktionsdifferenzen-Quotienten(EDQ)-Diagramme wurden 1968 für die Theorie der Reaktionskinetik eingeführt. (H. Mauser, Z. Naturforsch. 23b (1968), S.1025-30).

Dabei wurde an reagierenden chemischen Systemen mit zum Teil kurzlebigen Intermediaten gezeigt, daß man durch Auftragen der zeitlich aufeinanderfolgenden Extinktionswerte bei einer Wellenlänge ($\lambda_i$) gegen die korrespondierenden Werte zu gleicher Zeit bei einer anderen Wellenlänge ($\lambda_j$) unter Eliminierung des Zeitparameters charakteristische Kurven erhält. Solche Diagramme $E_{\lambda_i}$ versus $E_{\lambda_j}$ werden Extinktionsdiagramme genannt (= E-Diagramme).

Bildet man Differenzen von Extinktionswerten und trägt diese gegen die korrespondierenden Differenzen anderer Wellenlängen auf, so entstehen in gleicher Weise Extinktionsdifferenzendiagramme (= ED-Diagramme). Zur Differenzenbildung werden Extinktionswerte zu verschiedenen Reaktionsphasen herangezogen.

Dividiert man korrespondierende Differenzen verschiedener Wellenlängen durcheinander, entstehen Extinktionsdifferenzen-Quotienten-Diagramme (=EDQ-Diagramme). Solche Differenzen stellen Determinanten des Ranges 1 dar. Man kann das System auf Determinanten des Ranges 2, 3, ... bis s weiterführen.

Trotz der Existenz solcher Diagramme im theoretischen Bereich der Kinetik seit über 25 Jahren einerseits und der ebenfalls langandauernden, bisher wenig effizienten Bemühungen der Gerätehersteller andererseits, die zentrale Schwachstelle der Peakauswertung, z. B. in der Chromatographie zu überwinden, ist bisher keine Anwendung der obigen Diagramme auf eine rationalisierende Verarbeitung der in den Analysengeräten registrierten Datenflut vorgeschlagen worden. Dies liegt wohl daran, daß die kinetische Untersuchung von Reaktionsmechanismen und die chromatographischen Trennverfahren für Stoffgemische keinerlei Berührungspunkte aufweisen. Sie dienen völlig verschiedenen Zwecken. Reaktionskinetische Theorien und die praktischen Probleme der Trennung von Stoffgemischen stellen weit voneinander entfernte Disziplinen dar. Die Einführung von E-Diagrammen in die Stofftrennung war sichtlicherweise nicht naheliegend.

Es hat sich nun herausgestellt, daß durch die Anwendung der E-, ED-, EDQ-Diagramme und insbesondere der speziell für das erfindungsgemäße Verfahren entwickelten und nachfolgend beschriebenen, integralen Extinktions-Diagramme (= iE - Diagramme) auf die Analyse der Spektren die Substanzzuordnung und Bestimmung bei chromatographischen Trennungsverfahren überraschenderweise extrem einfach und überschaubar werden. Es kann auf Anhieb entschieden werden: Mono-Peak, Doppel-Peak oder Multi-Peak, ggf. die Komponentenzahl. Auch ein eingelagerter Rausch-Peak kann als solcher erkannt werden. Komplizierte logistische Hilfseinheiten werden dadurch überflüssig. Das Gesamtinstrumentatrium wird durch das neue Verfahren einfacher, sicherer und kostengünstiger. Für das Gesamtverfahren bis zum Analysenendergebnis wird zusätzlich ein bedeutender Zeitgewinn erzielt.

Die Geschwindigkeit, die Sicherheit und die Kostenverhältnisse der Analysen werden in spektakulärer Weise verbessert

In der Chromatographie basiert das Verfahren darauf, daß sich die registrierten Spektren in Abhängigkeit von der Retentionszeit ändern. Indem Extinktionen verschiedener Wellenlängen $E_{\lambda_i}$ (t), die jeweils aus gleichen Retentionszeiten (t) hervorgehen, gegeneinander aufgetragen werden, erhält man charakteristische geometrische Gebilde und damit die gesuchte Aussage über die Authentizität und die Komplexität der untersuchten Signale. Solche Gebilde sind Punkte, Geraden, Flächen oder multidimensionale Gebilde (Polyeder). Von einer Peakextremität mit niedrigen E-Werten ausgehend evoluieren die Kurven im E-Diagramm entlang solcher Figuren bis zu einem Umkehrpunkt mit maximalen E-Werten und kehren an der anderen Peakextremität zum Ursprungspunkt im E-Diagramm zurück. Das so gespannte Diagramm heißt Extinktionsraum. Die verursachende Retentionszeit ist darin nicht mehr enthalten.

Durch die Einführung der erfindungsgemäßen Vereinfachung in den chromatographischen Analysen- und Trennprozeß wird ein langanhaltender Mangel behoben. Auf einfachste Weise ergeben sich Reinheit bzw. Multiplizität der Peaks.

Auch auf jedes andere Verfahren, bei dem mit Hilfe zeitlich und/oder räumlich evoluierender Parameter Signale auf- und wieder abgebaut werden (z.B. NMR, Absorptions- oder Reflexions-Spektroskopie an Test-Trägermaterialien, Doppelwellen-Spektroskopie, Fluoreszens-Spektroskopie, Optische Rotationsdispersion, Circulardichroismus), ist die Erfindung anwendbar.

Bevor die Entwicklung und beispielhafte Anwendung der verschiedenen Diagramme auf die Erfindung beschrieben werden, wird in den nachfolgenden Tabellen die Leistungsfähigkeit schematisiert:

a) Signalpeaks mit 1 oder 2 Komponenten decken die überwiegende Mehrzahl der chromatographischen Probleme ab. Diese werden ad hoc mit Hilfe von E- und ED-Diagrammen unterschieden:

Tab. 1

| Diagramm | resultierende Kurvenform | ermittelte Komponentenzahl (s) |
|---|---|---|
| E, ED | Gerade | 1 |
| E, ED | Kurve | 2 oder mehr |

b) Universell ist die Erkennung und erfindungsgemäße Behandlung von Multikomponenten-Signalen mit Hilfe weiter entwickelter Diagramme möglich.

Tab. 1 erweitert sich dabei nach folgendem Schema:

Tab. 2

| Diagramm | resultierende Kurvenform | ermittelte Komponentenzahl (s) |
|---|---|---|
| EDQ Quotienten von Determinanten des Ranges 1 | Punkt | 1 |
| | Gerade | 2 |
| | Kurve | 3 oder mehr |
| EDQ Rang 2 | Punkt | 2 |
| | Gerade | 3 |
| | Kurve | 4 oder mehr |
| EDQ Rang s-1 | Punkt | s-1 |
| | Gerade | s |
| | Kurve | s+1 oder mehr |

Die Erfindung wird im folgenden anhand von Ausführungsbeispielen mit Hilfe der Figuren näher erläutert.

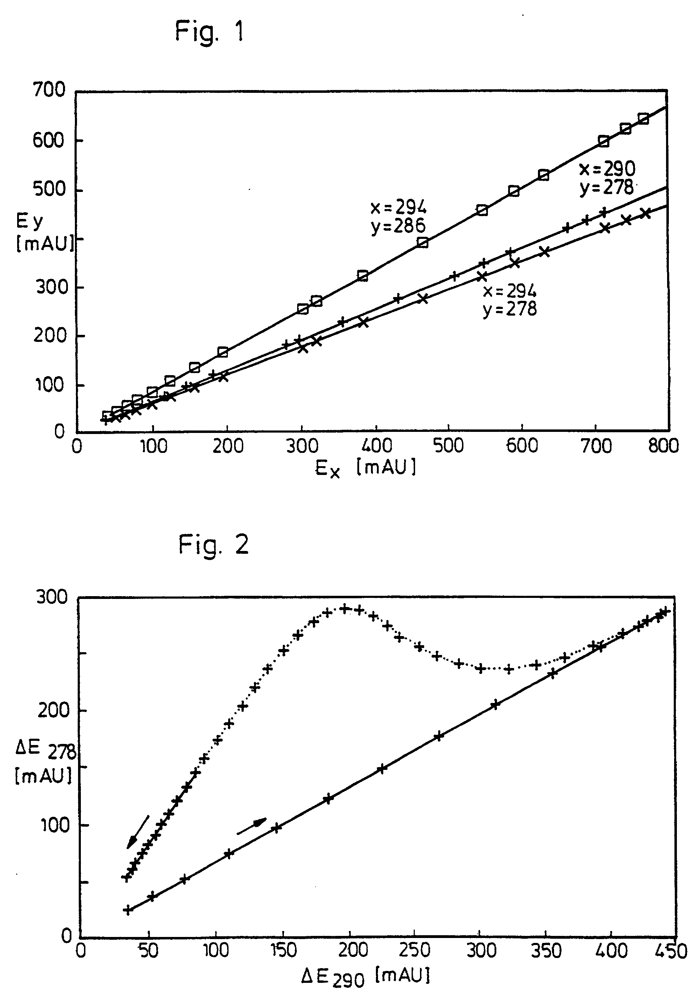

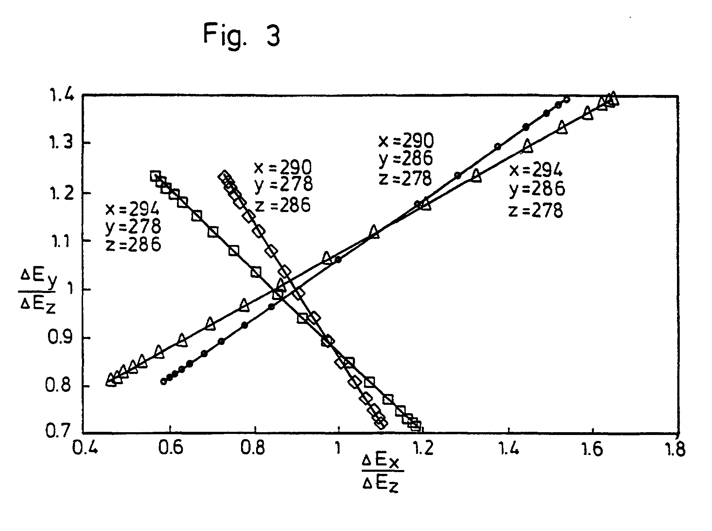

Die Figur 1 zeigt drei verschiedene Geraden im Extinktions(E)-Diagramm. Die Fig. 2 zeigt ein Extinktionsdifferenzen(ED)-Diagramm und die Fig. 3 vier Geraden im Extinktionsdifferenzen-Quotienten(EDQ)-Diagramm, bei denen die Quotienten von jeweils zwei Extinktionsdifferenzen verschiedener Wellenlängen gegeneinander aufgetragen sind. Der Parameter ist dabei die Zeit.

I. Konstruktionen von E-, ED-, integralen E- und integralen ED-Diagrammen

Zu Detektionszwecken werden in der Chromatographie Spektren im UV-VIS-Gebiet meistens wellenlängenabhängig ($\lambda$) zu verschiedenen Retentionszeiten (t) registriert. Im E-Diagramm werden die zu den t-Werten gemessenen Extinktionen bei verschiedenen Wellenlängen ($\lambda_i$, $\lambda_j$) gegeneinander aufgetragen, d. h.

$$E_{\lambda_i}(t) \text{ versus. } E_{\lambda_j}(t) \text{ oder vereinfacht } E_i(t) \text{ vs. } E_j(t)$$

Bei den registrierten Spektren wird in der Regel die Gültigkeit des verallgemeinerten Lambert-Beer-Bouguer'schen Gesetzes vorausgesetzt:

$$E_\lambda(t) \;=\; d \; \sum_{i=1}^{s} \; \varepsilon_{\lambda_i} \; c_i(t)$$

(d = Schichtdicke des Meßraumes von Lösung , Gas oder der Elektrophoresematrix; $\varepsilon_{\lambda,i}$ = Extinktionskoeffizient der Komponente i; $c_i$ = Konzentration von i; s = maximale Anzahl der absorbierenden und ggf. zum Peak beitragenden Komponenten).

Bei den Extinktionsdifferenzen (ED)-Diagrammen werden die entsprechenden Plots konstruiert:

$$\Delta E_{\lambda_i}(t) \text{ vs. } \Delta E_{\lambda_j}(t) \text{ oder vereinfacht } \Delta E_i(t) \text{ vs. } \Delta E_j(t)$$

Dabei gilt

$$\Delta E_{i,j}(t) = E_{i,j}(t) - E_{i,j}\,k \qquad E_{i,j}\,k = \text{Bezugswert}$$

Während $\Delta E_{i,j}$ und $E_{i,j}$ bei den Wellenlängen i und j zeitabhängige Größen sind, stellen die Werte $E_{i,j\,k}$ im Fall eines konstanten spektralen Untergrundes (keine Drift der wellenlängenabhängigen Basislinien) Konstanten dar. Für $E_{\lambda_i,j\,k}$ kann allgemein jeder k-te Meßwert (k = 0,1, wobei k=0 den durch das Eluationsmittel verursachten Anfangswert darstellt) herangezogen werden, jedoch empfiehlt es sich, erfindungsgemäß dafür die Anfangsmeßwerte ($E_{i,j\,o}$ mit k = 0) oder Meßpunkte in der Nähe von k = 0 zu verwenden.

Wenn "Peakreinheit" vorliegt, also nur eine einzige Komponente (s = 1) in dem zu analysierenden Peak des Chromatogramms spektroskopisch erfaßt wird, resultieren in den E- und ED-Diagrammen Geraden. Damit werden alle Einkomponenten-Signale des Chromatogramms sofort erkannt, von den inhomogenen Peaks getrennt und der quantitativen Auswertung zugeführt.

Meßbeispiel für Mono-Peak

Bei einer beispielshaften Ausführung des Verfahrens wurde Chlorogensäure (1,3 mg/ml) in Methanol gelöst, auf eine $C_{18}$-HPLC-Säule eingespritzt und mit Methanol (40%) und Wasser (mit 1% Essigsäure) eluiert. Die mit Hilfe eines UV-VIS-Diodenarrayspektrometers spektral bei 250 bis 400 nm registrierten Chromatogramme wurden anhand von E-Diagrammen ausgewertet. Dies führte am Beispiel des hier zwangsweise erhaltenen Mono-Peaks zu eindeutigen Geraden (Fig. 1).

Um sicher zu sein, daß sich die Homogenität über die gesamte Geometrie des Peaks erstreckt, ist es notwendig, die Extinktionen verschiedener Wellenlängenpaare miteinander zu kombinieren, wodurch man eine Serie von Geraden erhält. Auf diese Weise wird der Peak als Mono-Peak bestätigt.

Beginnend beim Peakanfang mit niedrigen Extinktionswerten sieht die Entstehung einer solchen Geraden so aus, daß sich die Punkte vom Koordinatenursprung des Diagramms in Richtung höherer E-Werte bis zu einem Kulminationspunkt bewegen und auf derselben Geraden wieder in den Ursprung zurückwandern.

Die fast inexistente Streuung der die Geraden bildenden Meßpunkte in Fig. 1 spricht für die absolute Präzision des erfindungsgemäßen Verfahrens.

Leistungsfähigkeit des Verfahrens

Vollständig unabhängig von der Peakform (Gaußsche Glockenkurve, Poisson-Verteilung u.a.) werden immer dann Geraden in den E- und ED-Diagrammen erhalten, wenn die Anzahl der zum Peak beitragenden Komponenten s = 1 ist. Der Peak ist rein und von keiner anderen Komponente gestört. Die Präzision des Verfahrens kommt daher, daß das beschriebene Verfahren vollständig unabhängig ist von dem sonst äußerst störenden Abklingverhalten (= asymptotische Rückführung auf den Anfangswert) des betreffenden Peaks. Damit wird ein Hauptstörfaktor bisheriger chromatographischer und sonstiger Detektionsverfahren auf einfachste Weise ausgeschaltet.

Dieses Verfahren ist die einfachste Methode zur Bestimmung der "Peakreinheit", das bisher entwickelt wurde und das zugleich hoch empfindlich ist Geringste systematische Abweichungen können noch signifikant erkannt werden. Mathematische Manipulationen bestehen hier nicht, abgesehen von elementaren Operationen wie der Bildung von Differenzen (ED-Diagramme), Quotienten (EDQ-Diagramme) und/oder von Integralen bei den nachfolgend beschriebenen iE-Diagrammen.

Das Verfahren ist frei von undurchsichtigen logistischen Operationen und auf diese Weise vollständig transparent für den Anwender. Es setzt beim Benutzer lediglich ein Minimum an Grundkenntnissen der Spektroskopie voraus. Rechenakrobatik und aufwendige chemometrische Methoden sowie das dazugehörige Instrumentarium werden überflüssig.

In der Praxis und in der Routinemeßtechnik empfiehlt es sich, die Wellenlängen $\lambda_i$ und $\lambda_j$ so auszuwählen, daß diese in den registrierten Spektren möglichst weit verteilt liegen. Auf diese Weise überstreicht man ein Feld mit ausgeprägten Änderungen der Extinktion und sichert so ein eindeutiges Ergebnis. Vorteilhaft wird dabei der gesamte Detektionsbereich erfaßt. Ausreichend sind jedoch bereits 5 Wellenlängen. Optimal kann man 10 oder mehr Wellenlängen verwenden.

Integrale Diagramme für Hochleistungs-Detektionstechnik und Grenzfälle

Wie bereits dargestellt, erfolgt die Detektion der Peaks zunehmend mit Hilfe von ultraschnellen Diodenarrayspektrometern, wobei die klassisch mit Hilfe von Photomultipliern registrierenden Sepktralphotometer zunehmend verdrängt werden. Man nimmt allerdings damit ein unvorteilhaftes Signal/Rausch (S/R)-Verhältnis in Kauf. Die folgende Lösung der erfindungsgemäßen Aufgabe schließt die Kompensation eines ungünstigen S/R-Verhältnisses beispielsweise bei Diodenarrayspektrometem ein. Dies geschieht durch eine Weiterentwicklung der Erfindung: Anstelle der beschriebenen E- und ED-Diagramme werden die entsprechenden integralen Konstrukte aufgestellt und in den automatisierten Analysenprozeß eingespeist.

Indem die Signale von mehreren Dioden integral zusammengefaßt werden, können im einfachsten Fall die Flächen unter den entsprechenden E-$\lambda$-Kurven durch einfaches Aufsummieren der Signal-Trapezflächen, die das Signalflächenintegral aufbauen, in Abhängigkeit von den Retentionszeiten bestimmt werden. In dieser Weise oder mit Hilfe anderer gängiger numerischer Verfahren können Integrale der Form

$$\int_{\lambda_1}^{\lambda_2} E_\lambda (t)\, d\lambda$$

präzise, schnell und sehr einfach ermittelt werden. Dadurch lassen sich die sog. integralen Extinktions (iE)-Diagramme konstruieren:

$$\int_{\lambda_1}^{\lambda_2} E_\lambda (t)\cdot d\lambda \qquad \text{vs.} \qquad \int_{\lambda_3}^{\lambda_4} E_\lambda (t)\cdot d\lambda$$

Dabei können $\lambda_2 = \lambda_3$ oder $\lambda_1 = \lambda_3$ sein. Praktisch hat sich für die Integrationsgrenzen ein Wellenlängenbereich ($\Delta\lambda = \lambda_2 - \lambda_1 = \lambda_4 - \lambda_3$) in der Größe von etwa 4-10 nm im UV-VIS-Gebiet als vorteilhaft erwiesen. Die so konstruierten iE-Diagramme führen zu den gleichen Aussagen wie die E-Diagramme, jedoch wird die Präzision dadurch noch einmal erhöht.

Strenge Peakreinheit (s=1) liegt vor, wenn in den iE-Diagrammen Geraden entstehen. Die Verwendung integraler iE-Diagramme führt noch im Falle sehr ungünstiger Signal/Rausch-Verhältnisse zu abgesicherten Ergebnissen, d.h., in den klassischen Detektionsverfahren vorerfindungsgemäß nicht mehr verwertbare Chromatogramme führen hier noch zu eindeutigen Resultaten.

Eine derartige Anwendung ergibt sich beispielsweise für die Sequenzierung von Peptiden, Proteinen und Proteinfraktionen mittels Edmann-Abbau, wo mit zunehmender Entfernung vom N-terminalen Ausgangspunkt die Signale schließlich im Rauschen untergehen und die Weitersequenzierung dadurch gestoppt wird. Das erfindungsgemäße Verfahren erlaubt es hier, das Rauschen herauszuglätten, ohne Verluste an der Realpeakintensität hinnehmen zu müssen. Es wird möglich, ohne Erhöhung des apparativ-materiellen Aufwandes die Proteinkette um weitere Aminosäurebausteine zu sequenzieren.

In analoger Weise werden die integralen Extinktionsdifferenzen (iED)-Diagramme angewendet:

$$\int_{\lambda_1}^{\lambda_2} \Delta E_\lambda(t) \cdot d\lambda \qquad \text{vs.} \qquad \int_{\lambda_3}^{\lambda_4} \Delta E_\lambda(t) \cdot d\lambda$$

Die genannten Varianten des erfindungsgemäßen Verfahrens können auch dann angewendet werden, wenn die Basislinie in Funktion der Wellenlängen zeitlich driftet. Indem die zeitabhängigen Werte der Basislinien ($E_\lambda{}^B(t)$) ermittelt werden (z. B. mit Hilfe von Polynomen), kann $\Delta E_\lambda(t)$ wie folgt definiert werden:

$$\Delta E_\lambda(t) = E_\lambda(t) - E_\lambda{}^B(t)$$

In dieser Weise werden "korrigierte ED-" bzw. "korrigierte i ED-Diagramme" konstruiert, mit denen auch hier eine Prüfung auf Peakreinheit möglich ist.

Der Riesenvorteil der verschiedenen integralen E-Diagramme (iE) kombiniert so die Grunderfindung der eindeutigen Peak-Analyse mit zusätzlicher Detektions-Empfindlichkeit und mit der Eliminierung von klassischen Störfaktoren wie Basisliniendrift. Dies wird mit einem geringfügig erhöhten Rechenaufwand erkauft, der jedoch computermäßig mühelos beherrschbar ist.

Doppel- und Mehrfach-Peaks

Systematische Abweichungen von den Geraden werden gefunden, wenn sich in den zu analysierenden Kurven des Chromatogramms bzw. Elektrogramms mehrere (s ≥ 2) Komponenten spektroskopisch bemerkbar machen. In diesen Fällen empfiehlt es sich, die weiter unten beschriebenen EDQ-Diagramme zu verwenden.

Wenn zwei oder mehrere Komponenten während der Chromatographie oder Elektrophorese nicht vollständig aufgetrennt werden, können Doppel- bzw. multiple Peaks entstehen. Auch quasi einfache Peaks, gegebenenfalls mit Schultern, werden beobachtet. Um festzustellen, ob dabei zwei oder mehrere Stoffe spektroskopisch erfaßt wurden, können erfindungsgemäß EQ-, EDQ-, integrale EQund integrale EDQ-Diagramme angewendet werden.

Dies wird an dem folgenden Meß-Beispiel erläutert (Fig. 2):

Zwei Stoffe werden in einem Trennverfahren nicht vollständig separiert: Es handelt sich um eine Mischung aus Epicatechin und Chlorogensäure (zwei miteinander verwandte Flavonoide). Verwendet wurde eine $C_{18}$-HPLC-Säule. Als Eluationsmittel dienten Methanol (40 %) und Wasser sowie Essigsäure (1 %). Die Peak-Detektion erfolgte mit Hilfe eines Diodenarrayspektrometers.

Der erste Stoff wird zwar im Anfangsbereich des chromatographischen Prozesses deutlich vom zweiten Stoff getrennt, jedoch werden in der Abklingphase beide Stoffe nicht mehr weiter getrennt. Im Endbereich ist das Konzentrationsverhältnis beider Stoffe nahezu konstant. Da sich insgesamt beide Stoffe unterschiedlich spektroskopisch bemerkbar machen, werden charakteristische E-, ED-, iE- und iED-Diagramme erhalten.

Das Prinzip eines solchen Diagramms, exemplarisch wird dazu das einfache ED-Diagramm betrachtet, gilt analog für die EDQ- und für alle integralen Diagramme.

Das ED-Diagramm ist auf die Anfangsmeßwerte ($E_{i,j\,k}$ mit k = 0) bezogen. In dem Maße, wie sich der chromatographische Peak entwickelt, beginnen sich die Meßpunkte auf einer Geraden aus dem Nullpunkt heraus fortzubewegen (Aufwärtspfeil in Fig. 2). Dieser lineare Bereich des ED-Diagrammes ist umso stärker ausgeprägt, je vollständiger die Trennung des ersten Stoffes vom zweiten ist. Wenn während des chromatographischen Prozesses die Konzentration des ersten Stoffes nach dem Erreichen eines Maximalwertes abnimmt, ohne daß sich dabei bereits der zweite Stoff spektroskopisch bemerkbar macht, laufen die Punkte im ED-Diagramm auf der ursprünglichen Geraden ein Stück in Richtung des Nullpunktes zurück. So liegen in Fig. 2 alle Aufwärtspunkte und die ersten Abwärtspunkte auf einer Geraden. Die Steigung dieser Geraden besitzt dann einen Wert, für den bei den Wellenlängen i und j gilt:

$$\frac{\Delta E_i}{\Delta E_j} = \text{constant} \qquad (= 1 \text{ EDQ-Wert})$$

Im Laufe des chromatographischen Prozesses macht sich nun der zweite Stoff spektroskopisch bemerkbar.

Dies bedeutet für die ED-Diagramme, daß die Punkte von der ursprünglichen Nullpunktsgeraden weglaufen (= nichtlineare Fortsetzung der Rücklaufkurve in Fig. 2). Dies hat folgende Konsequenzen:

Anhand der ED-Diagramme kann sofort erkannt werden, ab welcher Retentionszeit der zweite Stoff spektroskopisch erfaßt wird; es ist also möglich, den ersten Stoff bis zu diesem Zeitpunkt in reiner Form anzusammeln.

Beim Erscheinen der zweiten Komponente verlassen im EDQ-Diagramm die nun folgenden Punkte den Anfangspunkt und ordnen sich ihrerseits auf einer Geraden an.

II. EQ-, EDQ-Diagramme und ihre integralen Analogen

Die Quotienten $\Delta E_i / \Delta E_j$ werden zur Konstruktion von EDQ-Diagrammen verwendet. Fig. 3 stellt ein EDQ-Diagramm für das in Fig. 2 beschriebene Stoffgemisch dar. Dazu werden die Quotienten verschiedener Wellenlängenkombinationen

$$\frac{\Delta E_i}{\Delta E_j} \quad \text{und} \quad \frac{\Delta E_k}{\Delta E_j}$$

gegeneinander aufgetragen (3 Wellenlängen i, j, k). Die geometrische Interpretation dieses Quotientenpaares sind die Steigungen von ausgezeichneten Geraden in den Diagrammen

$$\Delta E_i \text{ vs. } \Delta E_j \quad \text{(Fig. 2)}$$

und

$$\Delta E_k \text{ vs. } \Delta E_j$$

Mindestens 2 ED-Diagramme werden benötigt, um ein EDQ-Diagramm zu konstruieren (Fig. 3). So führen die beiden Aufwärtsgeraden von 2 ED-Diagrammen im korrespondierenden EDQ-Diagramm zu einem Punkt.

Ermittelt man die EDQ-Werte für die Punkte, die nicht im linearen Anfangsbereich bei den ins Verhältnis gesetzten ED-Diagrammen liegen und trägt diese im korrespondierenden EDQ-Diagramm gegeneinander auf, so ergibt sich eine Gerade.

Beim Erscheinen der 2. Komponente in dem von uns beschriebenen Anwendungsbeispiel ordnen sich die resultierenden EDQ-Punkte ihrerseits auf einer Geraden in Fig.. 3 an. Um Entartungsfälle zu erkennen, werden mehrere Wellenlängenkombinationen getestet Werden ausschließlich Geraden erhalten, ist sichergestellt, daß der Chromatographie-Peak genau 2 Komponenten enthält (s = 2), wie im Ausführungsbeipiel beschrieben.

An diesem, wie an anderen Beispielen war es möglich, hochsignifikant nachzuweisen, daß in derartigen Peaks ausschließlich 2 Komponenten spektroskopisch erfaßt wurden.

Allgemein werden in den Peaks der Chromatogramme sowie der Elektrogramme ausschließlich nur dann zwei Komponenten (s = 2) spektroskopisch erfaßt, wenn die spektralen Meßdaten zu Geraden in den EDQ-Diagrammen führen. Praktisch empfiehlt es sich, Wellenlängen auszuwählen, die möglichst weit verteilt in den Spektren liegen. Wiederum genügen 5 - 10 Wellenlängen, um eindeutige Ergebnisse zu erlangen. Das Verfahren ist auch hier für den Anwender völlig transparent. Es werden lediglich Differenzen und Quotienten gebildet. Dies geschieht ohne rechnerischen Aufwand.

Für die Quotientenbildung lassen sich verschiedene Ausdrücke heranziehen, so daß neben den EDQ-Diagrammen auch Extinktions-Quotienten (EQ)-, integrale EDQ- und integrale EQ-Diagramme konstruiert werden können. Das EDQ-Diagramm geht direkt in das EQ-Diagramm über, wenn die Bezugswerte $E_{i,j\,k}$ null betragen, so daß für die Extinktionsdifferenz $\Delta E_{i,j}(t)$ gilt:

$$\Delta E_{i,j}(t) = E_{i,j}(t) - E_{i,j\,k} = E_{i,j}(t)$$

Demnach werden bei den EQ-Diagrammen die Plots

$$\frac{E_i}{E_j} \quad \text{vs.} \quad \frac{E_k}{E_j}$$

hergestellt.

Bei den integralen EDQ-Diagrammen werden die entsprechenden Quotienten gebildet und gegeneinander aufgetragen:

$$\frac{\displaystyle\int_{\lambda_3}^{\lambda_4}\Delta E_\lambda \cdot d\lambda}{\displaystyle\int_{\lambda_1}^{\lambda_2}\Delta E_\lambda \cdot d\lambda} \quad \text{vs.} \quad \frac{\displaystyle\int_{\lambda_5}^{\lambda_6}\Delta E_\lambda \cdot d\lambda}{\displaystyle\int_{\lambda_1}^{\lambda_2}\Delta E_\lambda \cdot d\lambda}$$

Analog dazu wird das integrale EQ-Diagramm (iEQ) verwendet.

Für das Integrationsintervall $\Delta\lambda(\lambda_2 - \lambda_1, \lambda_4 - \lambda_3, \lambda_6 - \lambda_5)$ hat sich bei Diodenarrayspektrometern im UV-VIS-Gebiet ein Differenzwert von etwa 4 - 10 nm bewährt

Ein besonderer erfindungsgemäßer Vorteil der Verwendung der integralen iEQ- und iEDQ-Diagramme besteht darin, daß beispielsweise Chromatogramme im Falle des 2- oder Mehrkomponentensystems auch dann noch signifikant ausgewertet werden, wenn die Spektren stark verrauscht sind und/oder sich die Spektren der Einzelkomponenten nur geringfügig voneinander unterscheiden. Durch die Integrationsbildung werden verrauschte Daten sichtbar gemacht, das Glätten des Rauschens erfolgt ohne Verlust am Real-Peak.

Differentielle Diagramme

Umgekehrterweise können anstelle der integralen Werte auch die durch Ableitung erhaltenen differentiellen Werte miteinander in Bezug gesetzt werden.

Dadurch wird eine Serie von differentiellen (d-)Diagrammen erhalten, die analog zu den normalen und den integralen Werten aus dE, dED, und/oder dEDQ Werten gebildet werden. Diese Derivativ-Technik bringt den Vorteil einer noch schärferen Unterscheidung der Peak-Komponenten, jedoch wird dadurch auch das Rauschen der Basislinien amplifiziert.

Glättung von Meßkurven

Darüber hinaus empfiehlt es sich in vielen Fällen, zusätzlich eine Glättung der Meßdaten mit Hilfe von Polynomen vorzunehmen, bevor die E-, ED-, EDQ-, iE-, iED-, iEDQ-, dE-, dED- und dEDQ-Diagramme konstruiert werden.

III. Verallgemeinerung des erfindungsgemäßen Verfahrens auf Multipomonentensysteme beliebigen spektroskopischen Ursprungs

Bei Peaks mit Multikomponenten-Zusammensetzungen (s-Komponenten) werden EQs und EDQs-Diagramme sowie deren integrale Formen konstruiert.

Ganz allgemein wird im EDQs-Diagramm der folgende Plot konstruiert ($\Delta E_{\lambda_i} = \Delta E_i$):

$$
\begin{vmatrix}
\Delta E_1 & \Delta E_{11} & \cdots & \Delta E_{1(s-2)} \\
\Delta E_2 & \Delta E_{21} & \cdots & \Delta E_{2(s-2)} \\
\vdots & & \vdots & \\
\Delta E_{(s-1)} & \Delta E_{(s-1)1} \cdots & & \Delta E_{(s-1)(s-2)}
\end{vmatrix}
\quad \text{vs.}
$$

$$
|D|
$$

$$
\begin{vmatrix}
\Delta E_{(s+1)} & \Delta E_{(s+1)1} & \cdots & \Delta E_{(s+1)(s-2)} \\
\Delta E_2 & \Delta E_{21} & \cdots & \Delta E_{s(s-2)} \\
\vdots & & \vdots & \\
\Delta E_{(s-1)} & \Delta E_{(s-1)1} & \cdots & \Delta E_{(s-1)(s-2)}
\end{vmatrix}
$$

$$
|D|
$$

mit

$$
|D| =
\begin{vmatrix}
\Delta E_s & \Delta E_{s1} & \cdots & \Delta E_{s(s-2)} \\
\Delta E_2 & \Delta E_{21} & \cdots & \Delta E_{2(s-2)} \\
\vdots & & \vdots & \\
\Delta E_{(s-1)} & \Delta E_{(s-1)1} \cdots & & \Delta E_{(s-1)(s-2)}
\end{vmatrix}
$$

Es werden hier also die Quotienten von Determinanten des Ranges (s - 1) in einem zweidimensionalen Diagramm gegeneinander aufgetragen. Dazu müssen Extinktionsdifferenzen von mindestens (s+1) Wellenlängen in die Auswertung einbezogen werden. Die doppelt indizierten Größen $\Delta E_{mn}$ (m = 1, 2... (s + 1), n = 1, 2... (s - 2) beziehen sich auf experimentell bestimmte Extinktionsdifferenzen von (s - 2) ausgewählten Meßwerten bei (s + 1) Wellenlängen. Aus den Größen $\Delta E_i$ und $\Delta E_{mn}$ werden demnach Matrizen aufgebaut, deren Determinanten nach Quotientenbildung direkt zu den EDQs-Diagrammen führen.

In den EDQs-Diagrammen werden immer dann Geraden erhalten, wenn im zu untersuchenden Peak des Chromatogramms bzw. Elektrogramms sich genau s Komponenten spektroskopisch unterschiedlich bemerkbar machen. Auch hier werden in der Praxis durch Wellenlängenvariation verschiedene EDQs-Diagramme konstruiert. Geraden, die parallel zu den Koordinatenachsen und durch den Ursprung führen, sind als Entartungsfälle zu verwerfen.

Das gesamte Verfahrensschema für die Erkennung und die Entflechtung von Multi-komponenten-Peaks ist in den Tabellen 1 und 2 zusammengefaßt.

Die erfindungsgemäßen Analysen- und Trennverfahren sind völlig unabhängig von der Kenntnis der Spektren und/oder von den Extinktionskoeffizienten einzelner Komponenten.

Die Rechenoperationen einschließlich der Auflösung der Matrizen werden computermäßig ausgeführt. Die Diagramme sind in allen Analysenstadien abrufbar und visualisierbar, wodurch der Anwender eines auf diesem Verfahren beruhenden Instrumentes bei nicht routinemäßigem Lauf Eigenentscheidungen einspeisen kann: Er verfügt über ein in allen Phasen transparentes, hochkontrollierbares, lernfähiges und steuerbares Instruments.

Selbst hochproblematische Trennungsprobleme werden auf diese Weise rasch, aufwandsarm und kostengünstig gelöst.

Dazu werden nachfolgend noch zwei besonders charakteristische Anwendungsbeispiele von hoher Aktualität angeführt. Es handelt sich um Problemstellungen, für die ein dringender Lösungsbedarf besteht und die beim augenblicklichen Stand der Technik weitgehend ungelöst sind bzw. deren Bewältigung augenblicklich mittels vorerfindungsgemäßer Methoden einen unverhältnismäßig hohen Aufwand erfordert.

Dopingkontrolle bei Vorhandensein von Markierungssubstanzen

Es kommt immer häufiger vor, daß ein gesetzlich untersagtes Dopingmittel durch zusätzliche Einnahme einer an sich harmlosen Substanz maskiert wird. Letztere hat die Eigenschaft, in den gesetzlich festgelegten Analysenverfahren eine Peakposition zu besetzen, die von den gesuchten Dopingsubstanzen ebenfalls eingenommen wird. Damit wird die analytische Dopingkontrolle unterlaufen. Die Analyse geht ihrer juristischen Beweiskraft verlustig. Zumindest ergibt sich ein nicht eindeutiger Zustand, der beim augenblicklichen Stand der Routine-Kontrollen ungelöst ist. Die vorliegende Erfindung löst dieses Problem.

Durch fortschreitende, computergestützte Peakanalyse, beginnend bei einfachen E-Diagrammen und fortschreitend über ED-, EDQ-, EDQs-Diagramme und weiter über ihre integralen und differentiellen Analoga bis zu Kombinationen derselben untereinander wird es grundsätzlich möglich, selbst quasi-identisch gelegene Peaks als eine Peak-Gruppe zu entlarven. Damit wird ein beabsichtigtes oder unbeabsichtigtes Unterlaufen der gesetzlichen Kontrollen aufgehoben und deren juristische Beweiskraft wiederhergestellt. Dazu finden die bisher üblichen Routine-Analysengeräte Verwendung, die lediglich um ein Dispositiv zur erfindungsgemäßen automatisierten Peakzerlegung in seine Einzelbestandteile ergänzt werden.

Auffinden viröser und subviröser Erregermoleküle und ihre Unterscheidung von der Vielzahl nicht pathogener, zelleigener Komponenten

Die zunehmende Durchseuchung der gesamten belebten Welt durch immer neue Viren, Viroide, subviröse Erreger aller Art sowie unzählige intra- und extrazelluläre Übergangsformen zwischen ihnen (wie z.B. Satelliten, subgenome Segmente, Pseudoviren,Transposonen, Retrotransposonen, Plasmide) stellt eine bisher nicht dagewesene Gefahrensituation dar. Zahlreiche dieser Erreger sind hochpathogen im humanen, veterinären und phytosanitären Bereich bzw. modifizieren das Verhalten normalerweise harmloser Mikroorganismen im gleichen Sinne, so daß auch diese für Mensch und Tier gefährlich werden ("Killerbakterien").

Dazu gehören die Erreger neurodegenerativer Pathologien wie der Creutzfeldt-Jacob-Krankheit, von BSE und Scrapie, Erreger, die, wie zahlreiche andere, bisher unauffindbar geblieben sind. Die Aufgabe besteht darin, den jeweiligen Erreger aus einer Suppe zelleigener quasi-identischer Nukleinsäuren herauszutrennen, dies zunächst zu seiner wissenschaftlichen Entdeckung, später zur routinemäßigen Diagnose des entsprechenden Krankheitsfalles.

Ihrer insignifikantiven Unterschiede wegen erscheinen diese Moleküle bei den verschiedenen Detektionsmethoden samt und besonders in dem gleichen Peak, der seinerseits wieder von dem entsprechenden Peak aus nicht-infektiösem Zellmaterial nicht unterschieden werden kann.

Wegen dieser Schwierigkeiten ist z.B. die Entdeckung der Viroide durch T.O. Diener um Jahre verzögert worden, bis diese schließlich als eigenständige, hantelförmige Partikel elektronenmikroskopisch sichtbar gemacht werden konnten. Diese Methode ist aufwendig und zeitraubend, auch ist sie für infektiöse Agentien im Tier- und Humanbereich wenig erfolgversprechend, da eine korpuskuläre visualisierbare Eigenexistenz der gesuchten viroid-analogen Nukleinsäuren in der Tierzelle beim jetzigen Stand der Kenntnis ausgeschlossen scheint.

Die Entdeckung und Diagnose ist nur aus chromatographischen und elektrophoretischen Trennmethoden zu erwarten, wobei es darum geht, aus einem multikompositen Peak, der von quasi-identischen Molekülen verursacht wird, die Anwesenheit oder Abwesenheit eines zusätzlichen Erregermoleküls abzulesen. Die bisherige Unmöglichkeit einer präzisen Peak-Fein-Analyse muß als Ursache dafür angesehen werden, daß es bisher nicht gelang, den primären Erreger von beispielsweise BSE zu finden, d.h. ihn aus einer Suppe quasi-identischer, normal-zellulärer Nukleinsäuren herauszufischen. Es ist charakteristisch für den unentwickelten Stand der Technik, daß zur Zeit die leicht identifizierbaren entarteten Prion-Proteine als Verursacher der Krankheit angesehen werden, wobei zu bemerken ist, daß Prion-Proteine der molekularbiologischen Logik und der Gesamtheit der Befunde nach zwar das gut sichtbare Endergebnis, aber nicht die Ursache der Pathogenese darstellen und allenfalls als auto-katalysierender KoFaktor in einem bereits engagierten Krankheitsverlauf funktionieren können.

Wie bereits beschrieben, erlaubt auch hier das erfindungsgemäße Verfahren die Überschreitung bisher bestehender technischer Grenzen: multi komposite Detektionspeaks, die von quasi-identischen Molekülen oder sogar von verschieden stabilen schmelzisomeren Formen ein und derselben Nukleinsäure (z. B. Viroid) verursacht werden, können in ihre Einzelbestandteile feinaufgetrennt werden.

Je nach Schwierigkeitsgrad des gegebenen Falles wird dabei die Peak-Analyse mit immer weitergehender Perfektion vorangetrieben. Die Zahl der Parameter, der Kombinationen und die Organisation der Diagramme werden weiter entwickelt, bis jede einzelne Peak-Komponente als identifizierbares Einzelphänomen erscheint.

Insbesondere können Erregermoleküle aus infiziertem Material, die im normalen, nicht pathogenen Zellmaterial nicht vorhanden sind, als solche ausgegrenzt werden, dies sowohl zu ihrer Erst-Erforschung als auch später zur medizinischen Routine-Diagnostik.

Auch die verschiedenen Schmelz-Isomeren einer schließlich identifizierten Erreger-Nukleinsäure sind voneinander unterscheidbar und als Einzelspezies erkennbar. Sie erlauben Aussagen darüber, ob es sich um schwach oder hochvirulente oder ggf. nicht pathogene Erregerformen handelt.

Die daraus resultierenden Krankheitsverläufe können prognostiziert werden. Die Effizienz möglicher Medikamente kann rascher abgeschätzt werden, ohne monate- oder jahrelang auf das Erscheinen oder Nichterscheinen der langsamen progredienten letalen Syndrome warten zu müssen.

Von überragendem Interesse wäre dabei die Identifizierung bzw. Diagnose von nicht oder schwach pathogenen Erregerformen:

-    Sie erlauben im Einzelfall eine positive Diagnose:

extrem lange Inkubationszeiten, kein Ausbruch der Krankheit zu "Lebenszeit"

-    Sie inspirieren ihre Verwendung als nicht-immunogener "Impfstoff", z. B. gegen BSE, da diese Moleküle durch Inkompatibilitäts-Besetzung der aktiven Zentren in der Zellmaschinerie einem später eindringenden virulenten Erreger den Zutritt verweigern.

Dies ist ein weiteres Beispiel dafür, daß mit Hilfe des erfindungsgemäßen Verfahrens zahlreichen, durch den augenblicklichen Stand rein technisch limitierten Methoden in der Medizin und auf allen anderen Gebieten grenzüberschreitend neue Anwendungsgebiete und bisher nicht erwartete Perspektiven erschlossen werden.

**Patentansprüche**

1.    Verfahren zur Ermittlung der Anzahl von Komponenten in Peaks, Banden und Signalen, die zum Zwecke der Analyse und Stofftrennung in Spektrogrammen aller Art überall dort erhalten werden, wo energiekorrelierte Meßwerte, beispielsweise die Extinktion, in Funktion eines evolutiven Parameters, beispielsweise der Zeit, auf und wieder abgebaut werden, mit folgenden Verfahrensschritten:

a) Ermitteln von vier verschiedenen energiekorrelierten Meßwerten bei mindestens jeweils drei evolutiven Parameterwerten,
b) Bilden von jeweils drei Differenzen aus den vier zum gleichen evolutiven Parameter gehörenden energiekorrelierten Meßwerten,
c) Bilden von jeweils zwei Quotienten aus den jeweils drei Differenzen und
d) Auftragen der jeweils zwei Quotienten gegeneinander in einem Diagramm, wobei sich für eine Komponente im Gemisch ein Punkt, für zwei eine Gerade und für mehr als 2 Komponenten eine gekrümmte Kurve ergibt.

2.    Verfahren nach Anspruch 1, wobei zusätzlich jeweils vier Meßwerte bei einem oder mehreren weiteren Parameterwerten verwendet werden.

3.    Verfahren nach Anspruch 1 oder 2, **dadurch gekennzeichnet, daß** Integrale oder Differentiale der energiekorrelierten Meßwerte verwendet werden.

**4.** Verfahren nach Anspruch 2 oder 3, **dadurch gekennzeichnet, daß** bei einer gekrümmten Kurve im Diagramm bei jedem Parameter mindestens ein weiterer Meßpunkt ermittelt wird und daß anstelle der Quotienten, die Determinanten ersten Ranges darstellen, aus den entsprechenden Quotienten gebildete Determinanten zweiten oder höheren Ranges gegeneinander aufgetragen werden, wodurch auch drei oder mehr Komponenten eindeutig erkannt werden

**5.** Verfahren nach einem der Ansprüche 1 bis 4, **dadurch gekennzeichnet, daß** der evolutive Parameter die Retentionszeit der Kolonne ist und der korrespondierende optische Meßwert die Extinktionsdifferenzen- und Extinktionsdifferenzen -Quotienten-Diagramme und/oder ihre integralen Analoge bzw. ihre Differentialwerte konstruiert und in den technischen Prozeß manuell oder automatisch integriert werden.

**6.** Verfahren nach einem der Ansprüche 1 bis 4, **dadurch gekennzeichnet, daß** der von dem evolutiven Parameter auf- und abgebaute Meßwert jede weitere spektrometrische Größe wie Fluoreszenzintensität, Drehwinkel, Reflektionsvermögen, Elliptizität sowie quantitativ gemessene NMR-Intensitäten, Röntgen- und Gamma-Strahlungen sein kann.

**Claims**

**1.** Method of determining the number of components in peaks, bands and signals which are obtained, for the purpose of analysis and substance separation, in all types of spectrograms wherever energy-correlated measurement values, for example the extinction, as a function of an evolutive parameter, for example the time, are created and dismissed again, said method having the following method steps:

> a) determining four different energy-correlated measurement values for at least three respective evolutive parameter values,
> b) forming three respective differences from the four energy-correlated measurement values belonging to the same evolutive parameter,
> c) forming two respective quotients from the three respective differences, and
> d) plotting the two respective quotients relative to each other in a diagram,

wherein one point is produced for one component in the mixture, a straight line is produced for two components, and an arcuate curve is produced for more than 2 components.

**2.** Method according to claim 1, wherein four respective measurement values are additionally used for one or more additional parameter values.

**3.** Method according to claim 1 or 2, **characterised in that** integrals or differentials of the energy-correlated measurement values are used.

**4.** Method according to claim 2 or 3, **characterised in that** at least one additional measurement point is determined for each parameter when there is an arcuate curve in the diagram, and **in that**, instead of the quotients which represent determinants of a first rank, determinants of a second or higher rank, formed from the corresponding quotients, are plotted relative to one another, whereby even three or more components are clearly recognised.

**5.** Method according to one of claims 1 to 4, **characterised in that** the evolutive parameter is the retention time of the column, and the corresponding optical measurement value, the extinction difference and extinction difference quotient diagrams and/or their integral analogs or respectively their differential values are devised and incorporated manually or automatically into the technical process.

**6.** Method according to one of claims 1 to 4, **characterised in that** the measurement value, created and dismissed from the evolutive parameter, may be any additional spectrometric parameter, such as fluorescence intensity, angle of rotation, reflectability, ellipticity as well as quantitatively measured NMR intensities, X-rays and gamma rays.

**Revendications**

**1.** Procédé pour déterminer le nombre de composants dans des crêtes, des bandes ou des signaux obtenus pour l'analyse et la séparation des matières dans des spectrogrammes de tous types, selon lequel on compose et on décompose des valeurs de mesure corrélées en énergie par exemple l'extinction, en fonction d'un paramètre évolutif tel que le temps, comprenant les étapes de procédé suivantes :

    a) on détermine quatre valeurs de mesure différentes corrélées en énergie, pour au moins trois valeurs de paramètre évolutif,

    b) on forme chaque fois trois différences à partir des quatre valeurs de mesure corrélées en énergie, appartenant aux mêmes paramètres évolutifs,

    c) on forme chaque fois deux quotients à partir des trois différences, et

    d) on trace chaque fois deux quotients l'un par rapport à l'autre dans un diagramme, et pour un composant dans le mélange on obtient un point, pour deux composants une droite et pour plus de deux composants une courbe.

**2.** Procédé selon la revendication 1,

selon lequel on utilise en plus chaque fois quatre valeurs de mesure pour une ou plusieurs autres valeurs de paramètre.

**3.** Procédé selon l'une des revendications 1 ou 2,

**caractérisé en ce qu'**

on utilise l'intégrale ou la différentielle des valeurs de mesure corrélées en énergie.

**4.** Procédé selon l'une des revendications 2 ou 3,

**caractérisé en ce que**

pour une courbe non droite, dans un diagramme, pour chacun des paramètres, on détermine au moins un autre point de mesure et à la place des quotients on représente les déterminants d'un premier rang, on enregistre les déterminants du second rang ou d'un rang supérieur, obtenus à partir des quotients correspondants et on reconnaît sans équivoque trois ou plus de trois composants.

**5.** Procédé selon l'une des revendications 1 à 4,

**caractérisé en ce que**

le paramètre évolutif est le temps de rétention de la colonne et la valeur de mesure optique correspondante construit les diagrammes de différences d'extinction et de quotient de différences d'extinction et/ou leur intégrale analogique ou leur valeur différentielle, et on intègre manuellement ou automatiquement dans les procédés techniques.

**6.** Procédé selon l'une des revendications 1 à 4,

**caractérisé en ce que**

la valeur de mesure obtenue par composition ou décomposition du paramètre évolutif peut être n'importe quelle autre grandeur spectrométrique telle que l'intensité de la fluorescence, l'angle de rotation, la capacité de réflexion, l'élipsité ainsi que les intensités RMN, mesurées de manière quantitative, les rayonnements X ou les rayonnements gamma.

Fig. 1

Fig. 2

16

## Fig. 3